# EUROPÄISCHE PATENTSCHRIFT

(11) **EP 1 415 756 B1**
(45) Veröffentlichungstag und Bekanntmachung des Hinweises auf die Patenterteilung: **25.07.2007**
(21) Anmeldenummer: 04000631.4
(22) Anmeldetag: 29.05.2002
(51) Int. Cl.: B23K 26/06, G02B 5/30, H01S 3/10

(54) **Verfahren und Vorrichtung zur Steuerung des Laserstrahlenergiemittels zweier in eine entgegengesetzte Richtung drehenden Brewster-Elemente**
Method and device for controlling the laser beam energy using a pair of Brewster plates rotating in opposite directions
Méthode et dispositif de contrôle de l'énergie d'un faisceau laser à l'aide d'une paire d'élément Brewster tournant dans des directions opposées

(30) Priorität: 06.11.2001 DE 10154363
(43) Veröffentlichungstag der Anmeldung: 06.05.2004
(62) Teilanmeldung aus: 02011950.9
(73) Patentinhaber: RAYLASE AG, 82234 Wessling (DE)
(72) Erfinder: Hastings, Stephen, 82234 Wessling (DE); Dullin, Peter, 82234 Wessling (DE); Gill, Alistair, 82234 Wessling (DE); Wagner, Erwin, 82234 Wessling (DE); von Jan, Peter, 82234 Wessling (DE); Hauck, Wolfgang, 82234 Wessling (DE)
(74) Vertreter: Liesegang, Eva

(56) Entgegenhaltungen:
- WO-A-01/51244
- US-A- 2 423 321
- US-A- 4 775 220
- US-A- 6 004 487
- PATENT ABSTRACTS OF JAPAN Bd. 1995, Nr. 09, 31. Oktober 1995 (1995-10-31) & JP 7 151982 A (YUSEISHO TSUSHIN SOGO KENKYUSHO), 16. Juni 1995 (1995-06-16)

## Beschreibung

Die Erfindung betrifft eine Vorrichtung und ein Verfahren zum Steuern der Laserstrahlenergie eines Laserstrahls. Die Erfindung basiert auf dem Verfahren und der Vorrichtung gemaß dem Oberbegriff der Ansprüche 1 und 3, welcher in der internationalen Patentanmeldung WO-A-01/51244 beschrieben ist.

Die WO-A-01/51244 beschreibt ein Verfahren und eine Vorrichtung zum Steuern des Pegels der Laserstrahlenergie eines Laserstrahls, der über ein Target streicht, wobei wenigstens ein Laserstrahl-Ablenkmodul verwendet wird und das Laserstrahl-Ablenkmodul eine motorgetriebene Ablenkeinrichtung zum Führen des Laserstrahls über das Target und eine Polarisationssteuereinrichtung aufweist, wobei die Polarisationssteuereinrichtung die Strahlenergie des Laserstrahls, der über das Target streicht, abhängig von der Bewegung der Ablenkeinrichtung steuert. Die Polarisationssteuereinrichtung umfaßt insbesondere eine oder zwei Brewster-Elemente, z.B. Brewster-Platten oder Brewster-Fenster, die um eine Achse drehbar sind, welche parallel zur Ausbreitungsrichtung des Laserstrahls ist. Die eine oder zwei Brewster-Elemente können um einen Winkel zwischen 0° und 90° gedreht werden, um die Transmission des Laserstrahls zwischen 0% und 100% zu steuern. Bei einem Laserstrahl mit nur einer Polarisationsrichtung kann ein Brewster-Element, die auf den richtigen Brewster-Winkel eingestellt ist, dazu verwendet werden, zwischen 0% und 100% der polarisierten Strahlung hindurchzulassen. Die Drehung des Brewster-Elements wird mit der Bewegung der Ablenkeinrichtung, welche den Laserstrahl über die zu belichtende Fläche, das Target, führt, synchronisiert.

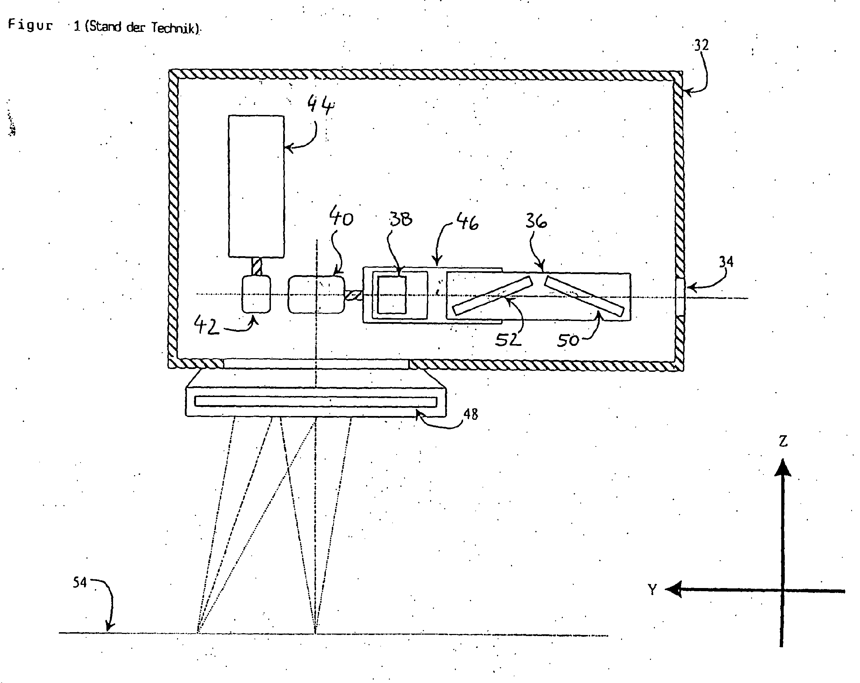

Fig. 1 zeigt eine Darstellung eines Laserstrahl-Ablenkmoduls gemäß der [WO-A-01/51244. Die Ablenkeinrichtung ist in einem Laserstrahl-Ablenkmodul oder Scankopf 32 integriert, in den durch eine Öffnung 34 ein linear polarisierter Laserstrahl eintritt. Das Laserstrahl-Ablenkmodul 32 umfaßt eine Polarisationssteuereinrichtung 36, die entlang der Strahlachse vor dem Ablenkmodul 32 integriert oder angebracht werden kann, eine Strahlaufweitungsoptik 38, einen Y-Achsen-Spiegel 40, einen X-Achsen-Spiegel 42, zwei galvanometrische Motoren 44 und 46 zum Drehen der zwei Spiegel 40 bzw. 42 und eine f(θ)-Fokussierlinse 48. Die Polarisationssteuereinrichtung 36 der Ausführungform der Fig. 1 umfaßt ein erstes Brewster-Element 50 und ein zweites Brewster-Element 52. In einer alternativen Ausführungsform kann diese Technik auch in Verbindung mit separaten Ablenkeinrichtungen und/oder fokussierenden Elementen vor oder nach dem Laserstrahl-Ablenkmodul eingesetzt werden.

In einer weiteren alternativen Ausführungsform umfaßt die Polarisationssteuereinrichtung nur ein einziges Brewster-Element, um im wesentlichen denselben Effekt, wie oben beschrieben, zu erreichen.

In der gezeigten Ausführungsform wird ein Kohlendioxid (CO₂)-Laser zum Erzeugen des Laserstrahls verwendet, der in genau einer Richtung linear polarisiert ist. Der Fachmann wird jedoch verstehen, daß auch jede andere geeignete Laserquelle verwendet werden kann. Der Laserstrahl tritt in das Laserstrahl-Ablenkmodul 32 durch die Öffnung 34 ein und geht durch die Polarisationssteuereinrichtung 36, in der zwei einander gegenüber liegende ZnSe-Brewster-Elemente 50, 52 auf die richtigen Brewster-Winkel in bezug auf die Wellenlänge des Laserstrahls eingestellt sind. Die Brewster-Elemente 50, 52 können um 90° gedreht werden, um den Laserstrahl zu dämpfen, so daß 100% bis 0% der Laserstrahlenergie durch die Brewster-Elemente 50, 52 hindurchgelassen wird, wenn sie gemeinsam von 0° bis 90° um die Laserstrahlachse gedreht werden. Für andere Arten von Lasern können andere Materialien für die Brewster-Elemente gewählt werden. Verschiedene Beschichtungen können auf den Flächen der Brewster-Elemente aufgebracht werden, welche die maximale und minimale Transmission, die Ausgangspolarisation und die erforderliche Drehung der Brewster-Elemente zum Steuern der Transmission verändern können. In der Praxis beträgt die maximale Transmission eines Brewster-Elements oder eines Brewster-Elementes der oben beschriebenen Art "nur" 99,98%. Für die Zwecke der vorliegenden Erfindung kann jedoch eine maximale Transmission von 100% angenommen werden. Wenn daher in dem vorliegenden Text eine Durchlässigkeit von 100% angegeben ist, bezieht sich dies auf die maximale Transmission des jeweiligen Brewster-Elementes, die bei der betrachteten Ausführungsform 99,98% beträgt.

Der Teil der Laserstrahlenergie, der bei dieser Ausführungsform durch die Brewster-Elemente 52, 50 hindurchgelassen wird, geht durch eine Strahlaufweitungsoptik 38, welche den Laserstrahldurchmesser erweitert, und wird dann von der Oberfläche des von einem Galvanometermotor angetriebenen Y-Achsen-Spiegels 40 abgelenkt, um dann von der Oberfläche des von dem Galvonometermotor angetriebenen X-Achsen-Spiegels 42 abgelenkt zu werden und durch die f(θ)-Fokussierlinse. 48 zu gehen, die den Laserstrahl auf einen feinen Punkt auf einer Zieloberfläche 54 fokussiert. Die Intensität des Laserstrahls, der die Zielfläche 54 überstreicht, wird durch die Steuerung der Drehung der Brewster-Elemente 52, 50 in Abhängigkeit von der Position, Drehung und Winkelgeschwindigkeit der motorgetriebenen Spiegel 40, 42 präzise gesteuert.

Es ist wichtig, daß die Beschleunigungszeiten bis zur und von der maximal erforderlichen Geschwindigkeit der kombinierten XY-Strahlposition auf der Zieloberfläche mit der Transmissionskurve der sich drehenden Brewster-Elemente in Einklang gebracht werden. In der Praxis sollten die Beschleunigungszeiten für die Bewegung des Strahls, der die Zielfläche in der X- oder Y-Richtung und besonders wichtig in der kombinierten XY-Richtung überstreicht, definiert sein. Es sei angenommen, daß diese mögliche Beschleunigungszeit bestimmt wird durch die Geschwindigkeit der Polarisationssteuereinrichtung 36 beim Drehen und somit Öffnen und Schließen der Brewster-Elemente. Beispielsweise sei angenommen, daß es 1 ms dauert, um das Brewster-Element mit einer annehmbaren Toleranz von 0 % auf 100 % zu öffnen, sowie 1 ms, um es zu schließen, so daß das Laserstrahl-Ablenkmodul 32 und insbesondere die kombinierten Scanspiegel 40, 42 die maximale Geschwindigkeit innerhalb von 1 ms erreichen sollten. Da beschichtete, voll vergütete Brewster-Elemente eine Transmission von 0 % haben, wenn sie auf den richtigen Winkel eingestellt sind, ist es nicht notwendig, den Laserstrahl zwischen den einzelnen Verarbeitungs- oder Markiervorgängen abzuschalten.

Die WO-A-01/51244 Anmeldung beschreibt die Funktion der Brewster-Elemente, die auf einen bestimmten Brewster-Winkel eingestellt sind, zum. Steuern der Laserleistung durch Reflexion oder Transmission eines einzelnen, richtungspolarisierten CO₂-Laserstrahls.

Das gleiche Verfahren kann auf jeden einzelnen richtungspolarisierten Energiestrahl angewendet werden, soweit das richtige Material für die Brewster-Elemente und der richtige Brewster-Winkel, der zu der Wellenlänge der Laserstrahlenergie gehört, gewählt werden.

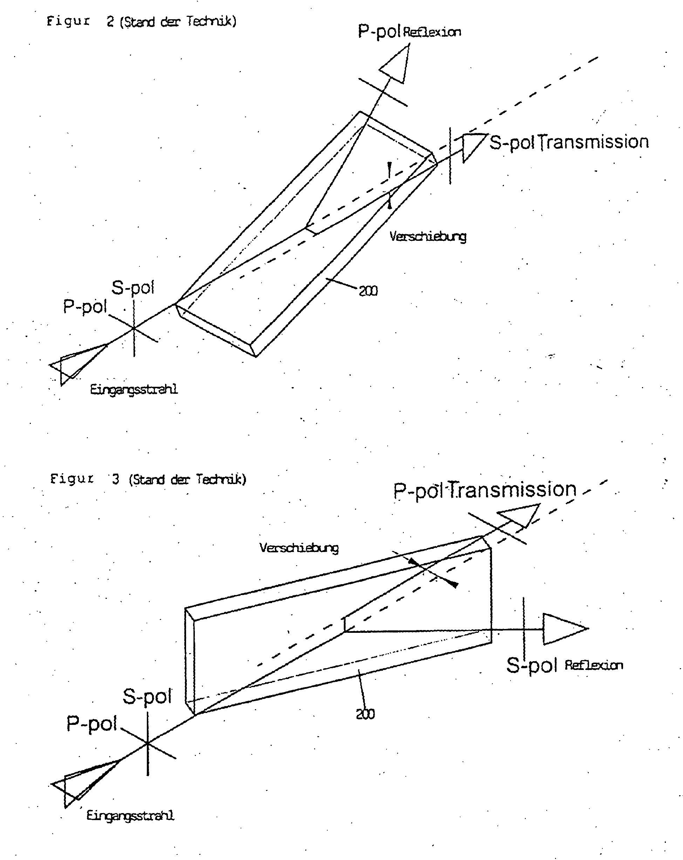

Fig. 2 zeigt, wie ein Laserstrahl, der entweder in die P-Pol (parallel) oder S-Pol (senkrecht) Richtung polarisiert ist, mit einem einzelnen Brewster-Element 200 reflektiert oder hindurchgelassen werden kann. Zum Zweck der Darstellung sind sowohl P-Polarisation als auch S-Polarisation in der Zeichnung dargestellt. Ein Fachmann wird jedoch verstehen, daß in der Praxis ein CO₂-Laserstrahl im wesentlichen nur eine Art von Polarisation (Linearpolarisation) aufweisen kann. Mit Bezug auf Fig. 2, wenn die Eingangspolarisation P-Pol ist, wird der Strahl reflektiert. Wenn die Eingangspolarisation S-Pol ist, wird der Eingangsstrahl hindurchgelassen.

Es besteht eine Schwierigkeit darin, daß der Laserstrahl um einen Faktor versetzt wird, der sich aus dem durch den Brewster-Winkel gegebenen Einfallswinkel und aus der Dicke des Brewster-Elements selbst ergibt.

Fig. 3 zeigt das Brewster-Element 200, das um 90° gedreht wurde, wobei nun der P-Pol-Strahl hindurchgelassen und der S-Pol-Strahl reflektiert wird. Der Laserstrahl wird um exakt den gleichen Faktor versetzt wie in Fig. 2, unterscheidet sich jedoch dadurch, daß er nun um 90° um die Mittellinie gedreht wurde.

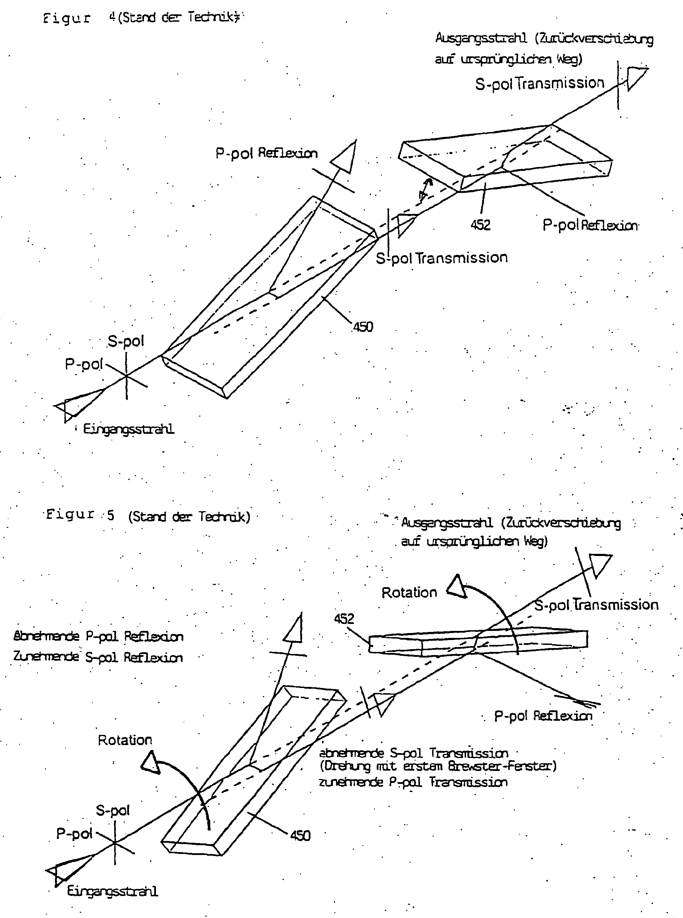

Fig. 4 zeigt zwei zueinander ausgerichtete Brewster-Elemente 450, 452, die es ermöglichen, daß der Ausgangsstrahl des Lasers zum Eingangsstrahl des Lasers nicht versetzt ist, weil das zweite Brewster-Element 452 die durch das erste Brewster-Element 450 erzeugte Parallelverschiebung kompensiert. In der Realität und abhängig von der Beschichtung der Brewster-Elemente 450, 452 wird der von dem ersten Brewster-Element 450 reflektierte Teil des P-Pol-Laserstrahls einen sehr hohen Prozentsatz des P-Pol-Eingangsstrahls umfassen, so daß nur noch ein sehr kleiner Prozentsatz von dem zweiten Brewster-Element 452 reflektiert werden muß.

Fig. 5 zeigt die zwei Brewster-Elemente 450, 452, die gemeinsam in dieselbe Richtung gedreht werden. Wenn die Drehung zunimmt, nimmt der Anteil des von dem ersten Brewster-Element 450 reflektierten P-Pol-Strahls ab und die P-Pol-Durchlässigkeit nimmt zu. Entsprechend nimmt mit der zunehmenden Drehung der Anteil der durch das erste Brewster-Element 450 durchgelassenen S-Pol-Laserstrahlung ab und die Reflexion der S-Pol-Laserstrahlung nimmt zu.

Es ist wichtig, zu beachten, daß die Laserstrahlpolarisation, welche das erste Brewster-Element 450 verläßt, mit der Drehung dieses ersten Brewster-Elements 450, abhängig von dessen Beschichtung, gedreht wird. Fig. 5 zeigt, daß jede P-Pol-Laserstrahlung, die durch das erste Brewster-Element 450 hindurchgelassen wird, daher von dem zweiten Brewster-Element 452 reflektiert wird. Und entsprechend wird jede S-Polarisation, die durch das erste Brewster-Element 450 hindurchgelassen wird, ebenfalls von dem zweiten Brewster-Element 452 hindurchgelassen.

Das zweite Brewster-Element 452 hat daher auf die Leistungssteuerung keine wesentliche zusätzliche Wirkung. Jedoch ist es für die Korrektur der Strahlverschiebung des Laserstrahls durch das erste Brewster-Element wesentlich.

Bei dem in Fig. 5 gezeigten Verfahren müssen die zwei Brewster-Elemente 450, 452 gemeinsam um 90° gedreht werden, um die Übertragung oder Durchlässigkeit vom Maximum zum Minimum zu steuern und die Verschiebung des Laserstrahls auszugleichen.

Druckschrift US 4,632,512 beschreibt ein Verfahren zur sequentiellen Dämpfung, Modulation und Polarisation, wobei die Laserstrahlquelle einen Laserstrahl emittiert, der in eine Richtung polarisiert ist. Der zur Polarisation benutzte Teil der Vorrichtung besteht aus einem feststehenden Paar symmetrische angeordneter Brewster-Elemente, wobei die Symmetrieachse des Polarisationsteils der Anordnung senkrecht zur Strahlachse liegt und die Brewster-Elemente zur Strahlachse in einem Winkel geneigt sind, der näherungsweise dem Brewster-Winkel entspricht.

US-A-2,423,321 beschreibt eine Vorrichtung zum Steuern der Lichtmenge, die durch ein optisches Element geht, wobei zwei Polarfilter verwendet werden, welche in entgegengesetzte Richtungen gedreht werden, um die Lichtstrahlenergie.zu verändern. Diese Schrift befaßt sich nicht mit Laserstrahlen und/oder hohen Lichtleistungen.

JP 07 151982 offenbart eine Vorrichtung zum Drehen der Polarisationsebene eines Laserstrahls mit zwei λ/2-Platten, die in entgegengesetzte Richtung gedreht werden.

Es ist die Aufgabe der vorliegenden Erfindung, das Verfahren und die Vorrichtung zum Steuern eines Laserstrahls weiter zu verbessern.

Zur Lösung dieser Aufgabe sieht die Erfindung ein Verfahren mit den Merkmalen von Patentanspruch 1 sowie eine Vorrichtung mit den Merkmalen von Patentanspruch 3 vor.

In einer ersten bevorzugten Ausführungsform der Erfindung werden zwei beschichtete Brewster-Elemente verwendet, von den jedes eine Durchlässigkeit von 100% (in der Praxis 99,98%) bis 0% hat, wenn es um 90° gedreht wird. Erfindungsgemäß werden diese zwei Brewster-Elemente nur jeweils um ungefähr +/- 45° gedreht, um die Transmission der Laserstrahlenergie vom 100% zum 0% zu steuern.

Mit anderen Worten betrifft die Erfindung ein Verfahren und eine Vorrichtung zur Feinsteuerung und Regelung der Laserenergie, die auf ein Target auftrifft, in direkter Beziehung zu der Geschwindigkeit des fokussierten Strahls oder Lichtflecks auf diesem Target.

Die Erfindung ist in folgenden anhand bevorzugter Ausführungsformen mit Bezug auf die Zeichnungen näher erläutert. In den Figuren:
- Fig. 1: zeigt eine schematische Darstellung einer Laserstrahl-Richteinrichtung gemäß dem Stand der Technik;
- Fig. 2: zeigt ein Beispiel eines Brewster-Element zur Erläuterung des Verhaltens eines polarisierten Laserstrahls, der von dem Brewster-Element reflektiert oder hindurchgelassen wird;
- Fig. 3: zeigt das Brewster-Element der Fig. 2, nachdem es um 90° gedreht wurde;
- Fig. 4: zeigt eine Anordnung aus zwei Brewster-Elementen, die in der Vorrichtung der Fig. 1 eingesetzt werden kann;
- Fig. 5: zeigt die Anordnung der zwei Brewster-Elementen der Fig. 4, wobei die Brewster-Elemente gemeinsam in dieselbe Richtung gedreht werden;
- Fig. 6: zeigt eine Anordnung aus zwei Brewster-Elementen gemäß der Erfindung, die in entgegengesetzte Richtung gedreht werden, um die Transmissionskurve der Fig. 7 zu erhalten;
- Fig. 7: zeigt ein Diagramm der Transmissionskurven eines Laserstrahls, wenn zwei beschichtete Brewster-Elemente gemäß Fig. 6 verwendet werden; und
- Fig. 8 und 9: zeigen eine Anordnung zum mechanischen Antreiben der zwei Brewster-Elemente der Fig. 6, synchron und in entgegengesetzten Richtungen, wobei in Fig. 8 die Brewster-Elemente mit 0° zueinander ausgerichtet sind und in Fig. 9 um +/- 45° gedreht sind.

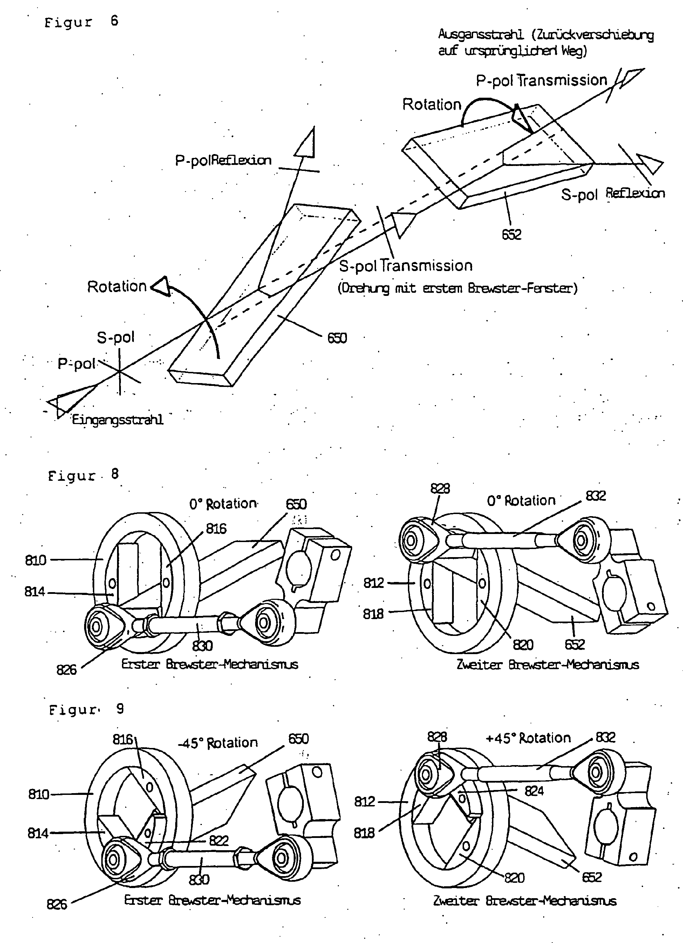

Fig. 6 zeigt eine Anordnung aus zwei Brewster-Elementen 650, 652 gemäß einer Ausführungsform der Erfindung, die in entgegengesetzte Richtung jeweils um ungefähr 45° gedreht werden, um die Transmission vom Maximum zum Minimum zu steuern. Die Brewster-Elemente 650, 652 dieser Ausführungsform der Erfindung sind beschichtet, um einen Transmissionsbereich von 100% bis 0% zu erhalten, wenn sie um 90° gedreht werden. Fig. 6 zeigt einen Eingangsstrahl, wobei zum Zwecke der Erläuterung sowohl P-Polarisation als auch S-Polarisation dargestellt sind. Ein Fachmann wird verstehen, daß ein Laserstrahl in der Regel nur in eine Richtung polarisiert ist, genauer gesagt ungefähr 99% in einer Richtung und der Rest senkrecht zu dieser Richtung. Ein Beispiel eines geeigneten Lasers, der in vorliegenden Erfindung eingesetzt werden kann, ist ein CO₂-Laser, wobei die Erfindung hierauf nicht begrenzt ist.

Die Erfindung ist im folgenden beschrieben, mit Bezug auf die Fig. 4 und 6. Fig. 4 zeigt die zwei Brewster-Elemente 450, 452 in ihrer Anfangspositionen, also ehe sie gedreht wurden.

Fig. 6 zeigt die zwei Brewster-Elemente 650, 652 gemäß der Erfindung in ihrer Endstellungen, nachdem sie um +/- 45° gedreht wurden. Die vorliegende Erfindung wird in bezug auf einen Laserstrahl mit S-Polarisation beschrieben.

In Fig. 4 wird der Laserstrahl mit S-Polarisation auf das erste Brewster-Element 450 gelenkt, das 100% der S-Polarisation hindurchläßt - und den Rest, ungefähr 1%, P-Polarisation reflektiert. Diese 1% unerwünschte P-Polarisation können durch Verwendung von beschichteten oder unbeschichteten statischen Brewster-Elementen, die vor der erfindungsgemäßen Einrichtung angebracht sind, abgefangen werden. Das erste Brewster-Element 450 versetzt den S-polarisierten Laserstrahl um einen Offset, wie in Fig. 4 gezeigt. Das zweite Brewster-Element 452 lässt in seiner Anfangsstellung ebenfalls 100% der S-Polarisation durch und reflektiert den Rest P-Polarisation, soweit vorhanden. Zusätzlich verschiebt das zweite Brewster-Element 452 den Laserstrahl zurück auf seinen ursprünglichen vertikalen Weg, wobei der transmittierte Strahl zum einfallenden Strahl in horizontaler Richtung eine geringe parallele Versetzung erfährt.

Mit Bezug auf Fig. 6 wird das erste Brewster-Element 650 um die Achse des Laserstrahls um 45° in eine erste Richtung gedreht. Die Transmissionskurve für die S-Polarisation geht dabei von 100% zu 50% Durchlässigkeit. D.h. der S-polarisierte Strahl wird zunächst zu 100% und dann abnehmend bis zu 50% hindurchgelassen, während das erste Brewster-Element gedreht wird, der Rest des S-polarisierten Strahls wird reflektiert. Zudem wird die S-Polarisierung des Strahls (der S-polarisierte Strahl), welcher das erste Brewster-Element verläßt, zusammen mit dem ersten Brewster-Element 650 um 45° gedreht.

Gleichzeitig wird das zweite Brewster-Element 652 um die Achse des Laserstrahls in die entgegengesetzte Richtung um 45° gedreht.

Nach der Drehung beider Brewster-Elemente 650, 652 in entgegengesetzte Richtungen, um 45°, wird somit 50% des S-polarisierten Strahls, gedreht um 45°, von dem ersten Brewster-Element 650 zu dem zweiten Brewster-Element 652 hindurchgelassen. Da das zweite Brewster-Element 652 um -45° gedreht wurde und der S-polarisierte Strahl um +45° gedreht wurde, ist der effektive relative Winkel zwischen dem zweiten Brewster-Element 652 und dem gedrehten S-polarisierten Strahl 90°. Durch Drehung des ersten Brewster-Elements 650 in die erste Richtung und des zweiten Brewster-Elements 652 in die entgegengesetzte Richtung geht somit der relative Winkel zwischen dem ursprünglichen S-polarisierten Strahl und dem zweiten Brewster-Element 652 von 0° auf 90°, so daß die Transmission des zweiten Brewster-Elements 652 von 100 % auf 0 % des S-polarisierten Strahls geht. Als Resultat ist der das zweite Brewster-Element 652 verlassende Strahl ein kontrollierter Wert des S-polarisierten Strahls zwischen 100% und 0%, wobei der Rest des S-polarisierten Strahls reflektiert wird. Zusätzlich verschiebt das zweite Brewster-Element 652 den Laserstrahl zurück auf seinen ursprünglichen vertikalen Weg.

Zusammengefaßt müssen gemäß der ersten Ausführungsform der Erfindung die beiden Brewster-Elemente jeweils nur um 45° gedreht werden, wenn das erste Brewster-Element 650 in eine Richtung und das zweite Brewster-Element 652 in die entgegengesetzte Richtung gedreht wird, um die Transmission vom Maximum zum Minimum zu steuern.

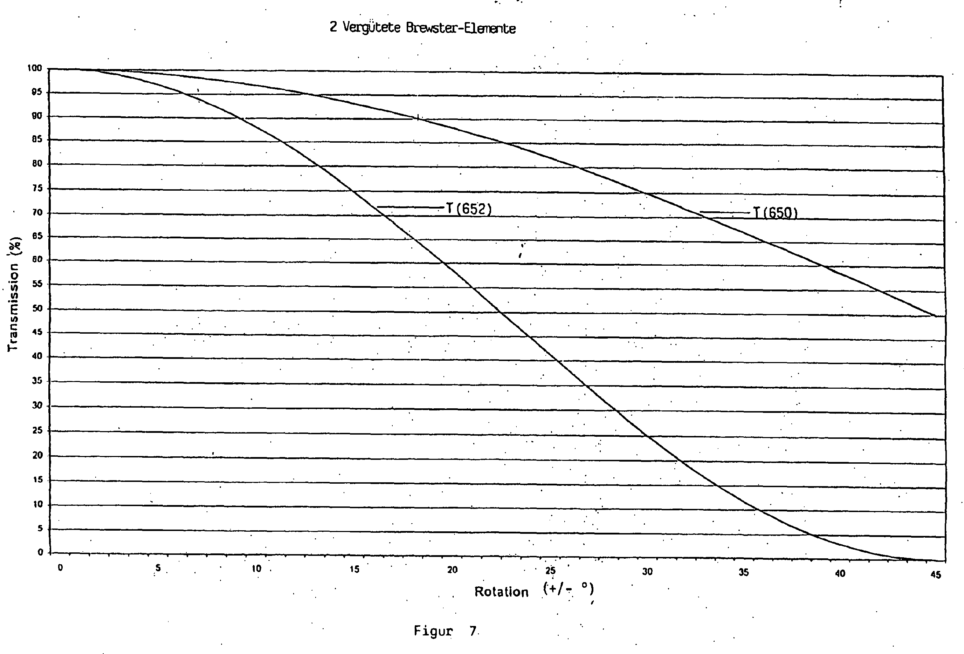

Dies ist noch besser darstellbar mit Hilfe der Transmissionskurven des Laserstrahls in Fig. 7, der von dem ersten und dem zweiten Brewster-Element 650, 652 hindurchgelassen wird. Die Transmissionskurve des ersten Brewster-Elements 650 ist mit T(650) bezeichnet und die kombinierte Übertragungskurve des ersten und des zweiten Brewster-Elements 650, 652 ist mit T(652) bezeichnet. Beschichtete, voll vergütete Brewster-Elemente sind verwendet, die jeweils eine Transmission von 100 % bis 0 % haben, wenn sie um 90° gedreht werden. Die Transmissionskurve des ersten Brewster-Elements T(650) zeigt, daß die Transmission von 100 % auf 50 % geht, wenn das Brewster-Element ausgehend von 0° um 45° gedreht wird. Gleichzeitig wird das zweite Brewster-Element 652 in die entgegengesetzte Richtung gedreht, um die Übertragungskurve T(652) zu erzeugen, die von 100 % auf 0 % bei 45° geht. Messungen haben gezeigt, daß die resultierende Transmissionskurve der zwei Brewster-Elemente 650, 652 dem oben erläuterten Verhalten entspricht.

Fig. 8 und 9 zeigen eine Anordnung zum mechanischen Antreiben der zwei Brewster-Element 650, 652, synchron und in entgegengesetzte Richtungen. Jedes Brewster-Element 650, 652 wird in einem Kugellager 810, 812 gehalten und mittels jeweils nur zwei Seitenelemente 814, 816, 818, 820 und einer Grundplatte 822, 824, an der eine direkte Verbindung 826, 828 zu einem Hebel 830, 830 angebracht ist, montiert. Der Hebel 830, 832 wird auf der Spindel eines Motors (nicht gezeigt) gedreht. -Erfindungsgemäß können die Brewster-Elemente 650, 652 mittels eines oder zwei Motoren gedreht werden, z.B. galvanometrische Motoren, Spindelmotoren oder alle anderen geeigneten Motoren.

Die vorliegende Erfindung hat mehrere Vorteile.

Für jede entsprechende Drehbewegung, vorwärts und rückwärts (oder umgekehrt), des ersten Brewster-Elements bzw. des zweiten Brewster-Elements wird die vertikale Verschiebung des Laserstrahls, der von dem ersten Brewster-Element hindurchgelassen wird, durch das zweite Brewster-Element rückgängig gemacht, wodurch der austretende Laserstrahl immer in gleicher Höhe und parallel zu dem eintretenden Laserstrahl ist.

Durch die Drehung der Brewster-Elemente um einen Winkel zwischen 0° und 45° ergibt sich der Vorteil höherer Geschwindigkeiten, mit denen die Erfindung arbeiten kann.

Durch die Verwendung mehrere Paare von Brewster-Elementen lassen sich die zur Transmissionssteuerung notwendigen maximalen Ablenkwinkel weiter reduzieren, die Geschwindigkeiten erhöhen und die horizontale und vertikale Verschiebung des Laserstrahls kompensieren.

Durch Drehen der Brewster-Elemente nur um maximal 45°, anstelle von 90°, ergeben sich zusätzliche Vorteile bei der Motorisierung des Systems, wobei z.B. galvanometrische Motoren in diesem Fall wesentlich besser arbeiten.

Mit Bezug auf die erfindungsgemäß Ausführungsform der Fig. 6 wird durch Drehung der Brewster-Elemente um ungefähr +/- 45° (oder umgekehrt) maximal die halbe S-Polarisation des Laserstrahls von dem ersten Brewster-Element reflektiert, wobei der Rest, der zusammen mit dem ersten Brewster-Element gedreht wird, von dem zweiten Brewster-Element reflektiert wird. Unter der vereinfachten Annahme, daß spezielle Parameter und das Verhalten der Beschichtung der zwei Brewster-Elemente näherungsweise vernachlässigt werden können, erlaubt die Kombination der zwei Brewster-Elemente die Steuerung der doppelten Laserstrahlenergie, da die Energie der von den zwei Brewster-Elementen jeweils reflektierten Anteile des Laserstrahls gleichmäßig auf zwei Energiefallen verteilt werden kann.

Wenn bei dieser Ausführungsform das erste und das zweite Brewster-Element um +/-45° gedreht werden, transmittiert erste Brewster-Element zwischen 100 % und 50 % der Laserenergie und reflektiert den Rest, während das zweite Brewster-Element zwischen 100 % und 0 % der von dem ersten Brewster-Element hindurchgelassenen 100 % bis 50 % transmittiert. In ihren Endstellungen von +/-45° reflektiert somit das erste Brewster-Element 50 % der ursprünglichen Laserstrahlenergie und das zweite Brewster-Element die verbleibenen 50 % der ursprünglichen Laserstrahlenergie, wodurch die Laserenergie, die in jeweils eine Strahlenfalle abgelenkt werden muß, halbiert wird. Dies erleichtert erheblich die Handhabung der Laserstrahlenergie, die von dem Brewster-Elementen reflektiert wird.

Die Erfindung sieht ein Verfahren und eine Vorrichtung vor, bei dem die Brewster-Elemente eine Beschichtung aufweisen, die Laserenergien von zwischen 1 und 6 kW aushalten kann.

## Patentansprüche

1. Verfahren zum Steuern der Laserstrahlenergie eines Laserstrahls mittels zweier Brewster-Elemente (650, 652), die entlang einer Achse ausgerichtet sind, die parallel zur Richtung des Laserstrahls ist, wobei die Brewster-Elemente (650, 652) um diese Achse gedreht werden, **dadurch gekennzeichnet, daß** ein erstes beschichtetes Brewster-Element (650) in eine Richtung und ein zweites beschichtetes Brewster-Element (652) in die entgegengesetzte Richtung gedreht wird und daß das erste und das zweite beschichtete Brewster-Element (650, 652) synchron jeweils um 0 bis +45° bzw. 0 bis -45° gedreht werden, um die Transmission des Laserstrahls vom 100% zum 0% und umgekehrt zu steuern.

2. Verfahren nach Anspruch 1, wobei der Laserstrahl ein linear polarisierter Laserstrahl ist.

3. Vorrichtung zum Steuern der Laserstrahlenergie eines Laserstrahls, mit zwei Brewster-Elementen (650, 652), die entlang einer Achse ausgerichtet sind, die parallel zur Richtung des Laserstrahls ist, und mit einer Antriebseinrichtung (810 - 832) zum Drehen der Brewster-Elemente (650, 652) um die Achse, **dadurch gekennzeichnet, daß** jedes Brewster-Element beschichtet ist, und daß die Antriebseinrichtung dazu geeignet ist, erstes beschichtetes Brewster-Element (650) in eine erste Richtung und zweites beschichtete Brewster-Element (652) in eine zweite, entgegengesetzte Richtung zu drehen, wobei das erste und das zweite beschichtete Brewster-Element (650, 652) synchron jeweils um 0 bis +45° bzw. 0 bis -45° drehbar sind, um die Transmission des Laserstrahls vom 100% zum 0% und umgekehrt zu steuern.

4. Vorrichtung nach Anspruch 3, mit einer Laserquelle zum Erzeugen eines linear polarisierten Laserstrahls.

5. Vorrichtung nach Anspruch 4, wobei die Laserquelle einen CO₂-Laser mit einer Ausgangsleistung zwischen 0.1 und 6 kW umfaßt.

## Claims

1. Method of controlling the laser beam energy of a laser beam, using a pair of Brewster elements (650, 652) which are aligned along an axis which is parallel to the direction of the laser beam, wherein said Brewster elements (650, 652) are rotated around said axis, **characterized in that** a first coated Brewster element (650) is rotated in one direction and a second coated Brewster element (652) is rotated in the opposite direction and that said first and second Brewster elements (650, 652) are rotated in synchronism, each through 0 to +45° and 0 to -45°, respectively, to control transmission of the laser beam from 100 % to 0 % and vice versa.

2. Method according to claim 1, wherein the laser beam is a linearly polarized laser beam.

3. An apparatus for controlling the laser beam energy of a laser beam, comprising a pair of Brewster elements (650, 652) which are aligned along an axis which is parallel to the direction of the laser beam, and driving means (810 - 832) for rotating the Brewster elements (650, 652) around said axis, **characterized in that** each Brewster element is coated and that said driving means are adapted to rotate a first coated Brewster element (650) in a first direction and a second coated Brewster element (652) in a second opposite direction, wherein said first and second Brewster elements (650, 652) are rotatable in synchronism, each through 0 to +45° and 0 to -45°, respectively, to control transmission of the laser beam from 100 % to 0 % and vice versa.

4. The apparatus of claim 3, comprising a laser source for generating a linearly polarized laser beam.

5. The apparatus of claim 4 wherein the laser source comprises a CO₂ laser having an output power of between 0.1 and 6 kW.

## Revendications

1. Procédé permettant de contrôler l'énergie d'un faisceau laser à l'aide de deux éléments de Brewster (650, 652), dirigés le long d'un axe lui-même parallèle à la direction du faisceau laser, les éléments de Brewster (650, 652) tournant autour de cet axe, **caractérisé en ce qu'**un premier élément de Brewster (650) plaqué tourne dans un sens et **en ce qu'**un deuxième élément de Brewster (652) plaqué tourne dans le sens inverse, et **en ce que** le premier et le deuxième éléments de Brewster (650, 652) plaqués tournent respectivement de manière synchronisée de 0 à +45 ° et/ou de 0 à -45 ° afin de régler la transmission du faisceau laser de 100 % à 0 % et inversement.

2. Procédé selon la revendication 1, le faisceau laser étant un faisceau laser polarisé de manière linéaire.

3. Dispositif permettant de contrôler l'énergie d'un faisceau laser à l'aide de deux éléments de Brewster (650, 652), dirigés le long d'un axe lui-même parallèle à la direction du faisceau laser, et à l'aide d'un dispositif d'entraînement (810-832) permettant de faire tourner les éléments de Brewster (650, 652) autour de l'axe, **caractérisé en ce que** chaque élément de Brewster est plaqué et **en ce que** le dispositif d'entraînement est adapté pour faire tourner le premier élément de Brewster (650) plaqué dans un sens et le deuxième élément de Brewster (652) plaqué dans un deuxième sens inversé, le premier et le deuxième éléments de Brewster (650, 652) plaqués pouvant tourner respectivement de manière synchronisée de 0 à +45 ° et/ou de 0 à -45 ° afin de régler la transmission du faisceau laser de 100 % à 0 % et inversement.

4. Dispositif selon la revendication 3, équipé d'une source laser permettant de produire un faisceau laser polarisé de manière linéaire.

5. Dispositif selon la revendication 4, la source laser comportant un laser au CO₂ d'une puissance de sortie comprise entre 0,1 et 6 kW.
